# EUROPEAN PATENT APPLICATION

(11) **EP 2 351 484 A1**
(43) Date of publication of application: **03.08.2011**
(21) Application number: 09821750.8
(22) Date of filing: 05.10.2009
(51) Int. Cl.: A01N 43/40, A01P 21/00

(54) **PARASITIC PLANT CONTROL AGENT AND PARASITIC PLANT CONTROL METHOD**

(30) Priority: 23.10.2008 JP 2008273361
(71) Applicant: Osaka University, Suita-shi Osaka 565-0871 (JP)
(72) Inventor: OKAZAWA, Atsushi, 565-0871 Osaka (JP); BENESH, Joseph, 565-0871 Osaka (JP)
(74) Representative: Bittner, Thomas L.
(86) International application number: PCT/JP2009/005150
(87) International publication number: WO 2010/047050

(57) **Abstract**

In order to provide a parasitic plant control agent and a parasitic plant control method each of which is capable of controlling a parasitic plant effectively, a parasitic plant is controlled by inhibiting gentianose metabolism in the parasitic plant so as to inhibit germination of the parasitic plant.

## Description

### Technical Field

The present relates to a parasitic plant control agent and a parasitic plant control method each of which is capable of controlling a parasitic plant effectively.

### Background Art

A phenomenon such that different kinds of organisms live together is referred to as symbiosis. A relationship in which one (a parasite) of the organisms receives a benefit and the other (a host) of the organisms receives some damage is referred to as parasitism. Such a parasitic relationship also exists between plants. In this case, a parasite of the plants is referred to as a parasitic plant and a host of the plants is referred to as a host plant.

Many parasitic plants have been identified and damage many host plants. In particular, various kinds of agricultural crops which are important as food have received damage from parasitic plants. The damage seems to be a cause for a current food shortage.

Many kinds of parasitic plants have been identified and are typified by, for example, plants belonging to an Orobanche species and a Striga species. In more detail, it is known that there exist not less than 100 kinds of Orobanche plants and seven kinds of the Orobanche plants damage agricultural crops and the like seriously. It is also known that there exist approximately 40 kinds of Striga plants and 11 kinds of the Striga plants damage agricultural crops and the like seriously.

More specifically, Striga plants are distributed in a dry region typified by Africa. Striga plants regard, as hosts, sorghum, corn, millet, rice, sugarcane, tobacco, sweet potato, and the like and damage these agricultural crops seriously. Note that a loss in agricultural crops due to Striga plants reaches as many as approximately 40% to 100% of yields of the respective agricultural crops. The loss is equivalent to an amount of food for 300 million people in Africa for one year. An amount of damage totals as much as approximately 7 billion dollars to 13 billion dollars.

Orobanche plants are distributed all over the world, especially around the Mediterranean. Orobanche plants regard, as hosts, legumes (e.g., faba bean, chickpea, and lentil), tomato, potato, tobacco, sunflower, and the like and damage these agricultural crops seriously. Note that a loss in agricultural crops due to Orobanche plants reaches as many as approximately 5% to 100% of yields of the respective agricultural crops (for example, for Moroccan legumes, a reduction in yield is 33% and an amount of damage totals approximately eight million dollars).

Since Striga and Orobanche plants are parasitic on roots of hosts in soil in an early stage of germination, the Striga and Orobanche plants are difficult to identify. Therefore, control of these parasitic plants tends to be delayed. The delay in control of the parasitic plants causes the parasitic plants to bloom and bear many extremely fine seeds, as many as not less than one hundred thousand grains of seeds per individual plant.

The seeds germinate only when the seeds encounter hosts. Namely, the seeds can germinate only when the seeds are stimulated by a host-derived germination-inducing factor under suitable temperature and humidity. However, the seeds can live for not less than 10 years without germinating. Therefore, once the parasitic plants are parasitic on agricultural crops, it is difficult to control the parasitic plants perfectly. This damages the agricultural crops seriously. Further, the parasitic plants tend to be distributed more extensively due to, for example, a global climate change. Therefore, it is expected that the parasitic plants will damage agricultural crops more and more seriously in the future. In view of the circumstances, it is urgent to develop a parasitic plant control agent and a parasitic plant control method each of which is capable of controlling a parasitic plant effectively.

For example, a herbicide which is highly selective with respect to a parasitic plant (e.g., an ALS inhibitor) has been used to control a parasitic plant.

Alternatively, a trap crop method has been used to control a parasitic plant. According to the trap crop method, for example, (i) agricultural crops to be harvested and (ii) plants which promote germination of a parasitic plant but are less likely to be subjected to parasitism are rotated with each other, so as to control a parasitic plant. Namely, the trap crop method causes a parasitic plant to kill itself by causing the parasitic plant to germinate under a condition where no host exists on which the parasitic plant can be parasitic.

Another method (suicidal germination) has been used (see Patent Literatures 1 through 3 and Non Patent Literature 1, for example). According to the another method, based on a knowledge that a host-derived germination-inducing factor causes germination of a parasitic plant, an analog or an alternative to the host-derived germination-inducing factor forces a parasitic plant to germinate under a condition where no host exists, so as to cause the parasitic plant to kill itself.

A further method has been used in which a resistance inducer for causing a host to be more resistant to a parasitic plant is used to control a parasitic plant (see

Patent Literature 4, for example). Specifically, the technique described in Patent Literature 4 uses a parasitic plant control agent containing at least one compound selected from the group consisting of tiadinil, probenazole, 2-chloroisonicotinic acid, and isotianil.

### Citation List

Patent Literature 1
   Japanese Patent Application Publication, Tokukaihei, No. 10-251243 A (Publication Date: September 22, 1998)
Patent Literature 2
   Japanese Patent Application Publication, Tokukaihei, No. 11-139907 A (Publication Date: May 25, 1999)
Patent Literature 3
   Japanese Patent Application Publication, Tokukaihei, No. 11-139908 A (Publication Date: May 25, 1999)
Patent Literature 4
   Japanese Patent Application Publication, Tokukai, No. 2008-37864 A (Publication Date: February 21, 2008)
Non Patent Literature 1
   Root Research, Yukihiro SUGIMOTO et al., 12(2): 51-56 (2003)

### Summary of Invention

### Technical Problem

However, a conventional parasitic plant control agent and a conventional parasitic plant control method which are described above have a problem such that it is impossible to control a parasitic plant effectively.

For example, the method which uses a herbicide has a problem such that usable agricultural crops are limited in kind depending on selectivity of the herbicide.

The trap crop method and the method which uses an analog or an alternative to a germination-inducing factor have a problem such that it is impossible to (i) powerfully induce germination of a parasitic plant and (ii) perfectly control enormous numbers of parasitic plants. Another problem occurs such that an analog or an alternative to a germination-inducing factor is produced at high cost and is less chemically stable.

The method which uses a resistance inducer has a problem such that it is impossible to induce hosts to be sufficiently resistant to a parasitic plant.

The present invention has been made in view of the problems, and an object of the present invention is to provide a parasitic plant control agent and a parasitic plant control method each of which is capable of controlling a parasitic plant effectively.

### Solution to Problem

As a result of diligent study in view of the problems, inventors of the present inventions finally accomplished the present invention by finding that (i) a metabolic pathway of gentianose is involved in a germination process in a parasitic plant and (ii) a parasitic plant can be controlled by inhibiting gentianose metabolism so as to inhibit germination of the parasitic plant.

Namely, in order to attain the object, a parasitic plant control agent of the present invention contains a gentianose metabolism inhibitor.

The parasitic plant control agent of the present invention is preferably arranged such that the gentianose metabolism inhibitor is a β-glucosidase activity inhibitor.

The parasitic plant control agent of the present invention is preferably arranged such that the β-glucosidase activity inhibitor is nojirimycin, cyclophellitol, neuromycin, 1-azafagomine, (3S,4S,5R)-3,4-dihidroxy-5-hydroxymethylpiperidine, D-mannono-δ-lactam, 2,4-dinitrophenyl-2-deoxy-2-fluoro-β-D-glucopyranoside, 2,4-dinitrophenyl-β-D-glucopyranoside, o-(difluoromethyl)aryl-β-D-glucoside, p-(difluoromethyl)aryl-β-D-glucoside, salicortin, cyclo-(D-proline-L-valine), or 1¹,4-anhydro-D-arabidohydrazide.

The parasitic plant control agent of the present invention is preferably arranged such that a parasitic plant to be controlled belongs to an Orobanche species or a Striga species.

In order to attain the object, a parasitic plant control method of the present invention includes the step of inhibiting gentianose metabolism in a parasitic plant.

The parasitic plant control method of the present invention is preferably arranged such that β-glucosidase activity is inhibited in the step.

The parasitic plant control method of the present invention is preferably arranged such that nojirimycin, cyclophellitol, neuromycin, 1-azafagomine, (3S,4S,5R)-3,4-dihidroxy-5-hydroxymethylpiperidine, D-mannono-δ-lactam, 2,4-dinitrophenyl-2-deoxy-2-fluoro-β-D-glucopyranoside, 2,4-dinitrophenyl-β-D-glucopyranoside, o-(difluoromethyl)aryl-β-D-glucoside, p-(difluoromethyl)aryl-β-D-glucoside, salicortin, cyclo-(D-proline-L-valine), or 1¹,4-anhydro-D-arabidohydrazide is applied to the parasitic plant as a β-glucosidase activity inhibitor in the step.

The parasitic plant control method of the present invention is preferably arranged such that the β-glucosidase activity inhibitor is applied to the parasitic plant at a concentration of not less than 1 µM.

The parasitic plant control method of the present invention is preferably arranged such that the gentianose metabolism is inhibited before the parasitic plant germinates.

The parasitic plant control method of the present invention is preferably arranged such that the parasitic plant belongs to an Orobanche species or a Striga species.

### Advantageous Effects of Invention

As described earlier, a parasitic plant control agent of the present invention contains a gentianose metabolism inhibitor.

As described earlier, a parasitic plant control method of the present invention includes the step of inhibiting gentianose metabolism in a parasitic plant.

Therefore, according to the present invention, it is possible to inhibit germination of enormous numbers of parasitic plants easily and effectively.

According to the present invention, it is possible to control a parasitic plant at low cost.

According to the present invention, it is possible to control a parasitic plant without adversely affecting agricultural crops and the environment.

According to the present invention, it is possible to provide agricultural crops which are harmless to human bodies.

According to the present invention, it is possible to selectively inhibit germination of a parasitic plant. More specifically, it is possible to selectively inhibit germination of a parasitic plant without inhibiting germination of a non-parasitic plant typified by, for example, Trifolium pratense and Arabidopsis thaliana.

### Brief Description of Drawings

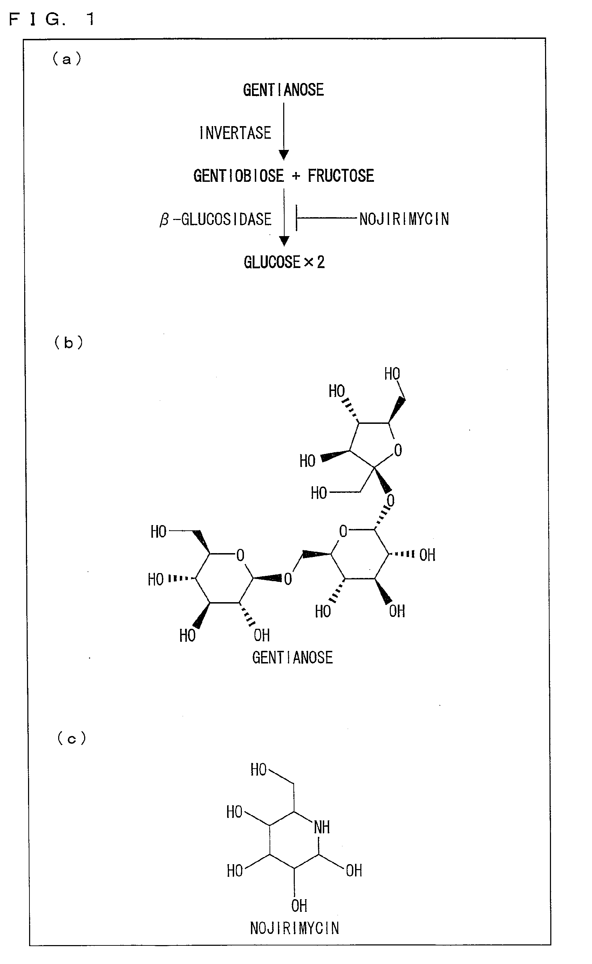

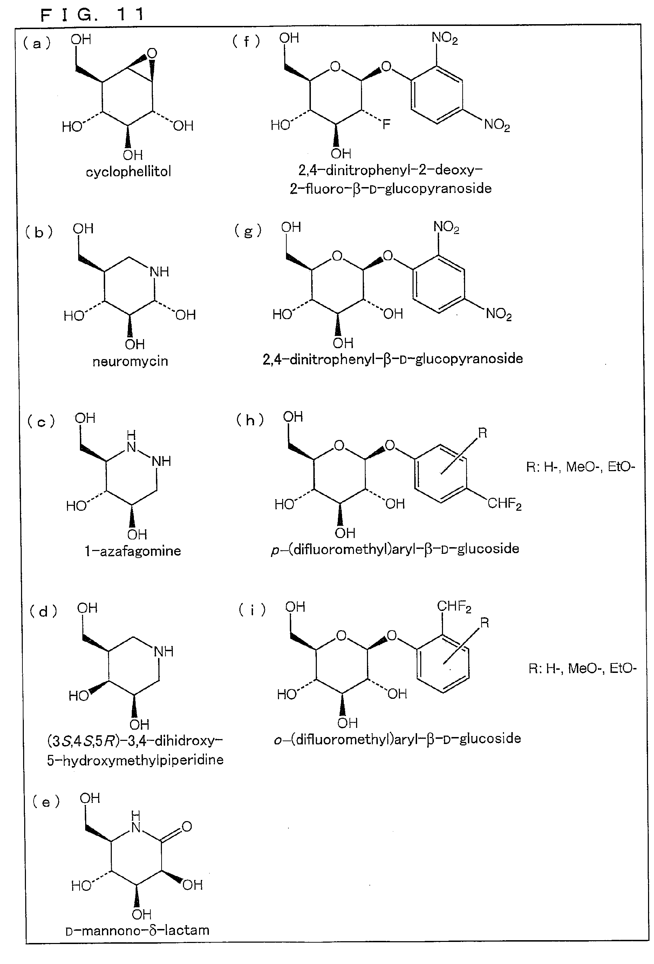

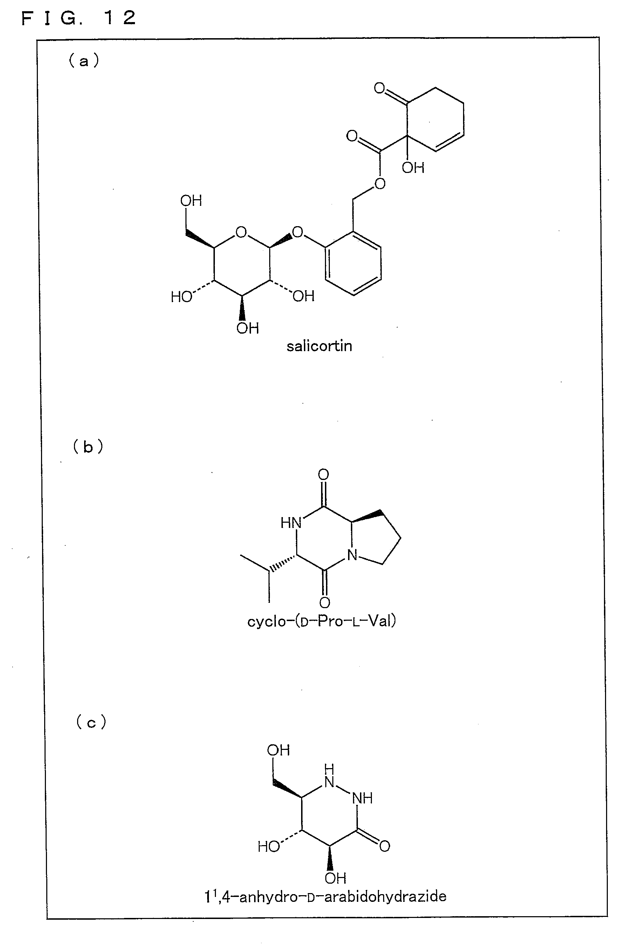

Fig. 1
   (a) of Fig. 1 is a flow chart partially illustrating a metabolic pathway of gentianose. (b) of Fig. 1 shows a chemical structural formula which represents gentianose. (c) of Fig. 1 shows a chemical structural formula which represents nojirimycin.
Fig. 2

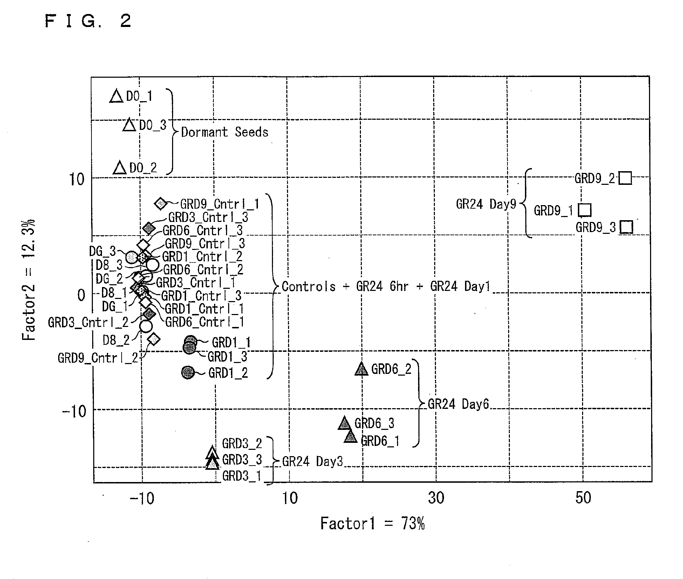

   Fig. 2 is a graph showing a result of a metabolomic analysis of a germination process in Orobanche minor.
Fig. 3

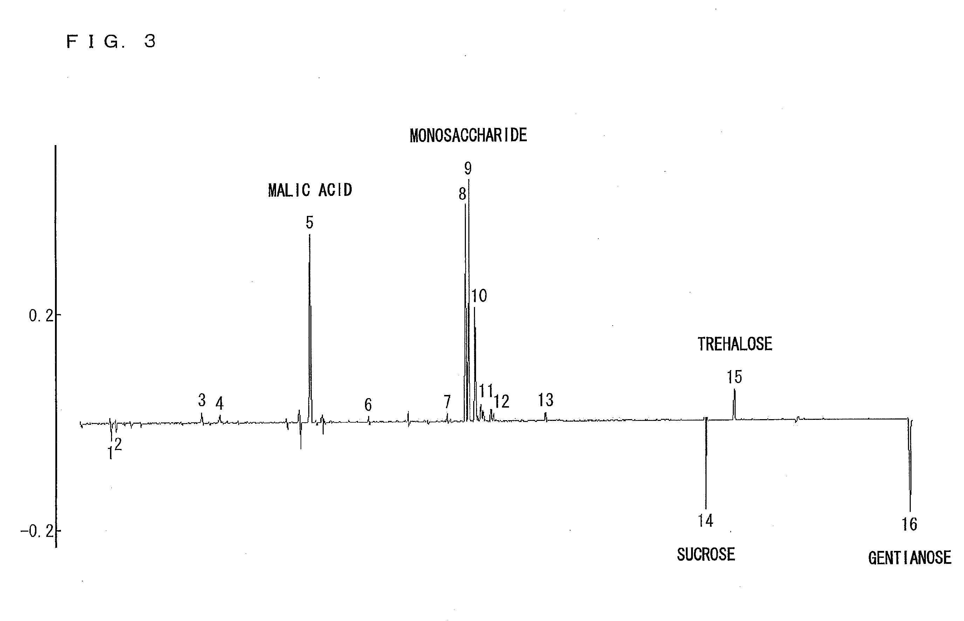

   Fig. 3 is a chart showing substances indicating metabolic changes in the germination process in Orobanche minor.
Fig. 4

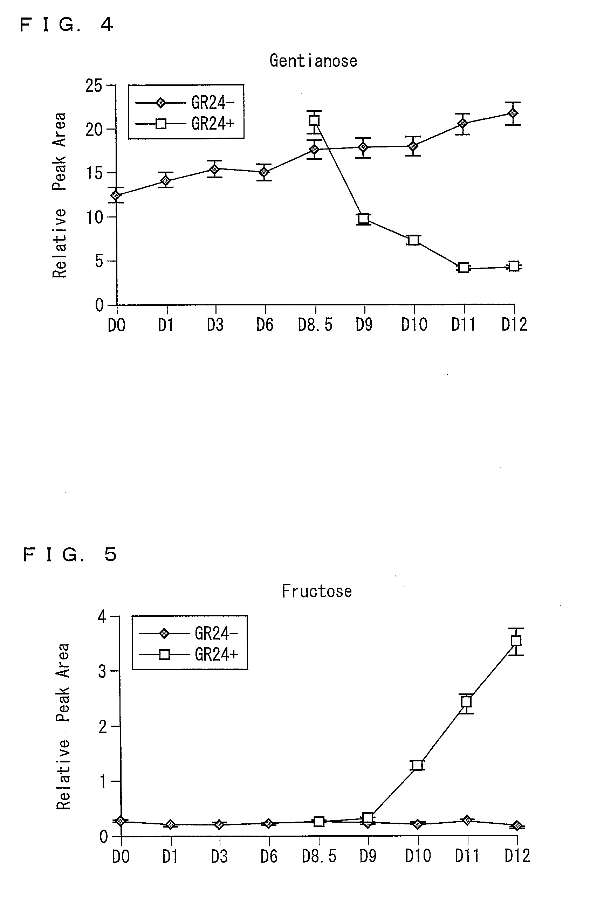

   Fig. 4 is a graph showing a metabolic change in gentianose in the germination process in Orobanche minor.
Fig. 5
   Fig. 5 is a graph showing a metabolic change in fructose in the germination process in Orobanche minor.
Fig. 6

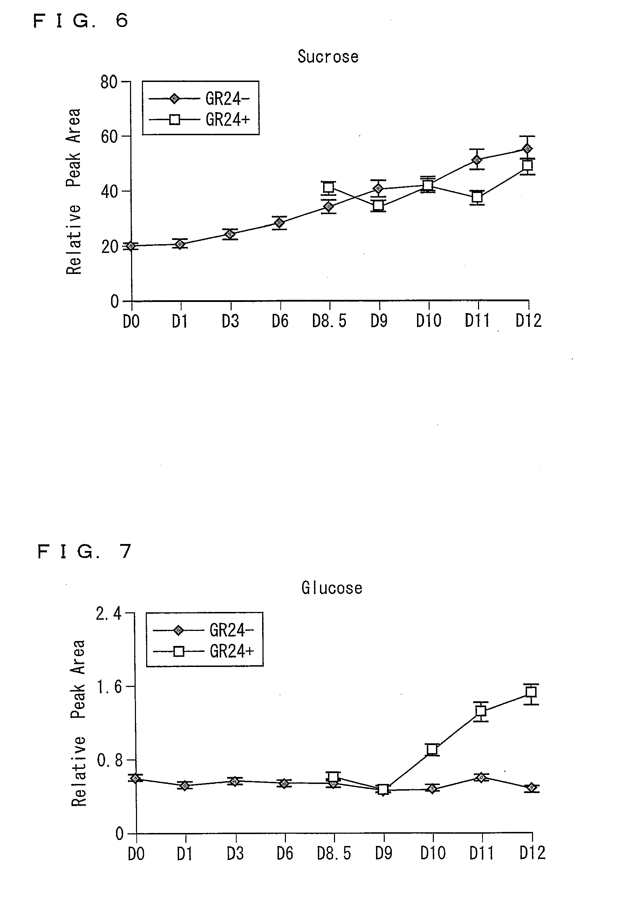

   Fig. 6 is a graph showing a metabolic change in sucrose in the germination process in Orobanche minor.
Fig. 7
   Fig. 7 is a graph showing a metabolic change in glucose in the germination process in Orobanche minor.
Fig. 8

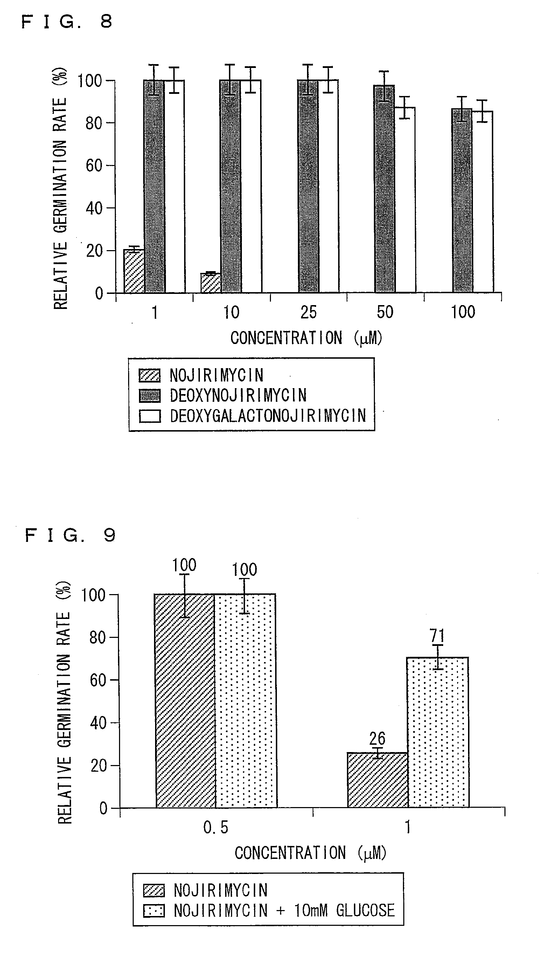

   Fig. 8 is a graph showing a germination rate for Orobanche minor in the presence of various enzyme inhibitors.
Fig. 9
   Fig. 9 is a graph showing a germination recovery effect of glucose versus a germination inhibition effect of nojirimycin.
Fig. 10

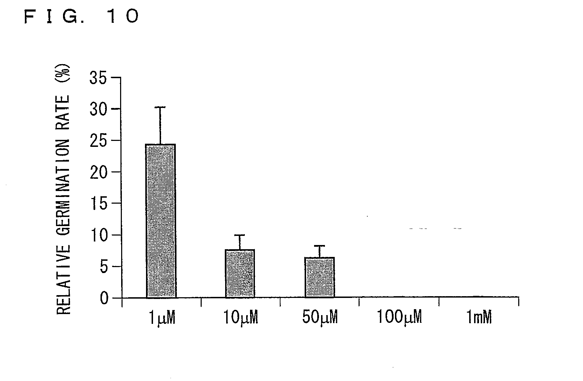

   Fig. 10 is a graph showing a germination rate for Striga gesnerioides in the presence of nojirimycin.
Fig. 11
   (a) through (i) of Fig. 11 show chemical structural formulas each representing an example of a β-glucosidase activity inhibitor.
Fig. 12
   (a) through (c) of Fig. 12 show chemical structural formulas each representing an example of the β-glucosidase activity inhibitor.
Fig. 13

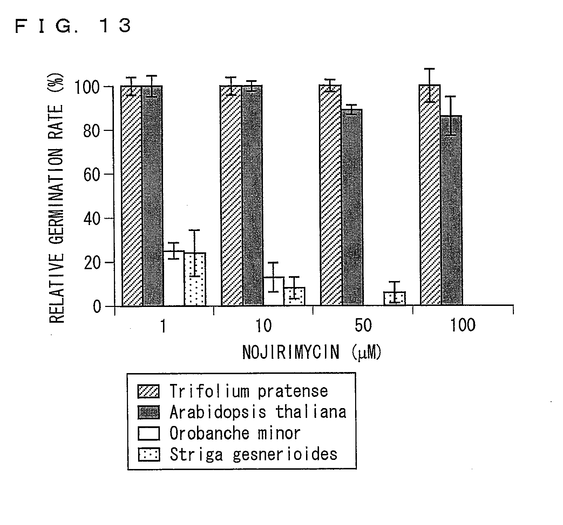

   Fig. 13 is a graph showing an effect of nojirimycin of selectively inhibiting germination of a parasitic plant.

### Description of Embodiments

An embodiment of the present invention is described below. However, the present invention is not limited to the embodiment.

### [1. Parasitic Plant Control Agent]

A parasitic plant control agent of the present embodiment contains a gentianose metabolism inhibitor. Note that "gentianose metabolism " herein encompasses various biological reactions involved in, for example, synthesis of gentianose, decomposition of gentianose, and synthesis of another substance which is made from gentianose.

It is only necessary that the gentianose metabolism inhibitor inhibit the gentianose metabolism. A specific arrangement of the gentianose metabolism inhibitor is not particularly limited. The gentianose metabolism inhibitor is preferably exemplified by a low molecular weight compound and a nucleic acid (e.g., DNA or RNA). Note that the nucleic acid may be a vector which contains a desired nucleic acid (e.g., a nucleic acid fragment for RNAi or a nucleic acid fragment which codes for an enzyme for synthesizing a gentianose metabolism inhibitor). The arrangement allows the gentianose metabolism inhibitor to easily enter a parasitic plant to be spread, so that gentianose metabolism can be inhibited effectively.

More specifically, it is preferable that the gentianose metabolism inhibitor be a β-glucosidase activity inhibitor. Note that invertase and β-glucosidase are enzymes which are involved in gentianose metabolism. Namely, invertase is the enzyme which synthesizes gentiobiose and fructose from gentianose, and β-glucosidase is the enzyme which synthesizes glucose from gentiobiose and fructose (see (a) of Fig. 1, for example). From the viewpoint of low toxicity to a host plant, the β-glucosidase activity inhibitor seems to be preferable.

A specific arrangement of the β-glucosidase activity inhibitor is not particularly limited. Preferable examples of the preferable β-glucosidase activity inhibitor include: nojirimycin, cyclophellitol, neuromycin, 1-azafagomine, (3S,4S,5R)-3,4-dihidroxy-5-hydroxymethylpiperidine, D-mannono-δ-lactam, 2,4-dinitrophenyl-2-deoxy-2-fluoro-β-D-glucopyranoside, 2,4-dinitrophenyl-β-D-glucopyranoside, o-(difluoromethyl)aryl-β-D-glucoside, p-(difluoromethyl)aryl-β-D-glucoside, salicortin, cyclo-(D-proline-L-valine), and 1¹,4-anhydro-D-arabidohydrazide (see (c) of Fig. 1, (a) through (i) of Fig. 11, and (a) through (c) of Fig. 12, for example). Note that these compounds are known as compounds for inhibiting β-glucosidase activity. From the viewpoint of economy and highly effective control of a parasitic plant, nojirimycin is the most preferable of the compounds. According to the arrangement, it is possible to control a parasitic plant effectively while minimizing a side effect on a host plant.

A parasitic plant to be controlled by the parasitic plant control agent of the present embodiment is not particularly limited. Any parasitic plant can be controlled by the parasitic plant control agent. It is preferable that the parasitic plant to be controlled by the parasitic plant control agent belong to an Orobanche species or a Striga species. The Orobanche plant, which is not particularly limited, is preferably exemplified by Orobanche minor. The Striga plant, which is not particularly limited, is preferably exemplified by Striga gesnerioides. The parasitic plant control agent of the present embodiment exerts an excellent control effect particularly on the parasitic plant to be controlled. Further, the parasitic plant control agent of the present embodiment can inhibit germination of a parasitic plant selectively without inhibiting germination of a non-parasitic plant typified by, for example, Trifolium pratense and Arabidopsis thaliana.

An amount of the gentianose metabolism inhibitor contained in the parasitic plant control agent of the present embodiment is not particularly limited. It is preferable that the parasitic plant control agent contain the gentianose metabolism inhibitor in an amount enough for the gentianose metabolism inhibitor to be applied to a parasitic plant at a concentration of not less than 1 µM. Namely, when a parasitic plant takes the parasitic plant control agent of the present embodiment in its body (e.g., in its seed), the parasitic plant takes, in its body, the gentianose metabolism inhibitor which is dissolved in a liquid (e.g., water). Therefore, it is preferable that the parasitic plant control agent of the present embodiment contain the gentianose metabolism inhibitor so that the gentianose metabolism inhibitor is contained in the liquid at a concentration of not less than 1 µM in this case. For example, in a case where the parasitic plant control agent of the present embodiment is a liquid, it is preferable that the gentianose metabolism inhibitor be contained in the liquid at a concentration of not less than 1 µM. In a case where the parasitic plant control agent of the present embodiment is a solid, it is preferable that the parasitic plant control agent contain the gentianose metabolism inhibitor so that the gentianose metabolism inhibitor has a concentration of not less than 1 µM when the parasitic plant control agent is dissolved in a given amount of liquid.

It is preferable that the parasitic plant control agent of the present embodiment contain a germination inducer for inducing germination of a parasitic plant. The germination inducer is not particularly limited. Preferable examples of the germination inducer include: GR24 (a kind of synthetic strigolactone), strigol, sorgolactone, alectrol, orobanchol, dihydrosorgoleone, jasmonic acid, cotylenins, fusicoccins, DMBQ (2,6-dimethoxy-p-benzoquinine), garba-GR24 (a kind of synthetic strigolactone), GR7 (a kind of synthetic strigolactone), and nijmegen-1 (as for specific structures of these compounds, see Non Patent Literature 1, for example). The parasitic plant control agent of the present embodiment controls a parasitic plant by inhibiting a germination process in the parasitic plant. In other words, the parasitic plant control agent of the present embodiment exerts its effect on a parasitic plant which is in the germination process and has not germinated. Therefore, according to the arrangement, it is possible to artificially initiate a germination process in a parasitic plant. This allows the parasitic plant control agent of the present embodiment to exert a greater effect of controlling a parasitic plant.

An amount of the germination inducer contained in the parasitic plant control agent of the present embodiment is not particularly limited. It is possible to set the amount appropriately in accordance with a concentration at which the germination inducer can induce germination.

The parasitic plant control agent of the present embodiment can contain a pesticide ingredient according to need. The pesticide ingredient is not particularly limited. Preferable examples of the pesticide ingredient include: a herbicide, a bactericide, an insecticide, a plant growth regulator, and an insect growth controller. Note that a more specific arrangement of the herbicide, the bactericide, the insecticide, the plant growth regulator, or the insect growth controller is not particularly limited and a publicly known arrangement can be used appropriately. According to the arrangement, the pesticide ingredient functions together with the gentianose metabolism inhibitor, so as to control a parasitic plant more effectively.

For example, in a case where the parasitic plant control agent of the present embodiment contains a sulfonylurea or imidazolinone herbicide, it is possible to (i) cause the gentianose metabolism inhibitor to inhibit germination of a parasitic plant (e.g., Scrophulariaceae Striga) and (ii) cause the herbicide to inhibit a parasitic plant (e.g., Scrophulariaceae Striga) which has germinated from entering a root of a host plant. This allows more effective control of a parasitic plant.

The parasitic plant control agent of the present embodiment can be arranged such that the gentianose metabolism inhibitor and the like may be dissolved in a liquid or supported by a solid support.

The solid support is not particularly limited. For example, a solid support or a liquid support which is commonly used for, for example, pesticide formulation is usable as the solid support.

For example, it is preferable to use a nonaqueous solid support or an aqueous solid support as the solid support.

More specifically, preferable examples of the nonaqueous solid support include: clay, calcium carbonate, talc, bentonite, calcined diatomite, uncalcined diatomite, hydrous silicic acid, cellulose, pulp, chaff, wood powder, and kenaf powder. Preferable examples of the aqueous solid support include: ammonium sulfate, sodium chloride, an inorganic salt (e.g., potassium chloride), a saccharide (e.g., glucose, sucrose, fructose, or lactose), urea, an urea formalin condensate, an organic acid salt, and an aqueous amino acid.

According to the arrangement, the gentianose metabolism inhibitor and the like can remain in, for example, a field (soil) for a long term. This allows effective control of a parasitic plant.

The solid supports mentioned above can be used alone or in combination. Such a solid support is contained in the parasitic plant control agent preferably in 0.5% by weight to 99.79% by weight, and more preferably in 20% by weight to 98% by weight with respect to a total weight of the parasitic plant control agent. The arrangement allows the gentianose metabolism inhibitor and the like to remain in, for example, a field (soil) for a long term.

A specific arrangement of the liquid support is not particularly limited, provided that the liquid support causes no crop injury. Preferable examples of the liquid support include: water, alcohol (e.g., methanol, ethanol, isopropanol, butanol, cyclohexanol, ethylene glycol, diethylene glycol, propylene glycol, hexylene glycol, polyethylene glycol, or polypropylene glycol), ketone (e.g., methyl isobutyl ketone, diisobutyl ketone, cyclohexanone, or γ-butyrolactone), ether (e.g., cellosolve), aliphatic hydrocarbon (e.g., kerosene or mineral oil), aromatic hydrocarbon (e.g., xylene, solvent naphtha, or alkyl naphthalene), ester (e.g., diisopropyl phthalate, dibutyl phthalate, dioctyl phthalate, or adipate ester), amide (e.g., dimethylformamide, diethylformamide, or dimethylacetamide), dimethylsulfoxide, a nitrogen-containing support (e.g., N-alkyl pyrolidone), and fat and oil (e.g., colza oil, soybean oil, olive oil, corn oil, palm oil, or castor oil).

Such a liquid support is contained in the parasitic plant control agent preferably in 0.5% by weight to 99.79% by weight, and more preferably in 20% by weight to 98% by weight with respect to a total weight of the parasitic plant control agent. The arrangement allows (i) the gentianose metabolism inhibitor and the like to be uniformly dissolved in the liquid support and (ii) the gentianose metabolism inhibitor and the like to be spread in a parasitic plant effectively.

It is preferable that the parasitic plant control agent of the present embodiment further contain an auxiliary ingredient such as a surfactant, a binder, a grinding aid, a stabilizer, or a pigment. The arrangement allows the gentianose metabolism inhibitor, the pesticide ingredient, and the like to fully exert their effects. Note that a weight ratio of the auxiliary ingredient to the parasitic plant control agent is not particularly limited and can be set appropriately.

The surfactant is not particularly limited. Preferable examples of the surfactant include: a nonionic surfactant (e.g., polyoxyethylene alkyl ether, polyoxyethylene polystyl phenyl ether, polyoxyethylene alkyl ester, or polyoxyethylene sorbitan alkyl ester) and an anion surfactant (e.g., alkyl naphthalene sulfonate, alkyl sulfate, polyoxyethylene polystyl phenyl ether sulfate, polyoxyethylene alkyl ether sulfate, polyoxyethylene polystyl phenyl ether phosphate, or dioctyl sulfosuccinate). The arrangement allows (i) the gentianose metabolism inhibitor to be easily dissolved in a liquid and (ii) the gentianose metabolism inhibitor and the like to be easily spread in a parasitic plant.

The binder, which is not particularly limited, is preferably exemplified by a natural polymer, a semi-synthetic polymer, and a synthetic polymer.

The natural polymer is not particularly limited. Preferable examples of the natural polymer include: starch, gum arabic, Tragacanth gum, guar gum, mannan, pectine, sorbitol, xanthan gum, dextran, gelatin, and casein. The semi-synthetic polymer is not particularly limited. Preferable examples of the semi-synthetic polymer include: dextrin, soluble starch, oxidized starch, pregelatinized starch, methylcellulose, ethylcellulose, carboxymethylcellulose, hydroxymethylcellulose, hydroxyethylcellulose, and hydroxypropylcellulose. The synthetic polymer is not particularly limited. Preferable examples of the synthetic polymer include: polyvinyl alcohol, polyacrylamide, polyvinyl pyrrolidone, sodium polyacrylate, an ethylene acrylate copolymer, a maleic anhydride copolymer, and polyethylene glycol. These binders can be used alone or in combination. Such a binder is contained in the parasitic plant control agent preferably in 0.1% by weight to 20% by weight, and more preferably in 0.3% by weight to 10% by weight with respect to a total weight of the parasitic plant control agent. The arrangement allows the parasitic plant control agent of the present embodiment to be more effective.

The grinding aid is not particularly limited. Preferable examples of the grinding aid include: a support made from ore (e.g., bentonite, zeolite, talc, acid clay, or activated clay), a synthetic support (e.g., white carbon (silica)), a plant support (e.g., a saccharide, dextrin, or powdered cellulose), a sarfactant (e.g., an anion surfactant), an organic compound, and a resin. The arrangement allows easier preparation of the parasitic plant control agent of the present embodiment.

The stabilizer is not particularly limited. Preferable examples of the stabilizer include: an antioxidant (e.g., butylated hydroxytoluene (BHT) or butylated hydroxyanisole (BHA)), an ultraviolet absorber (e.g., a hydroquinone ultraviolet absorber, a salicylic acid ultraviolet absorber, a benzophenone ultraviolet absorber, a benzotriazole ultraviolet absorber, or a cyanoacrylate ultraviolet absorber). According to the arrangement, it is possible to prevent decomposition of the gentianose metabolism inhibitor and the like. This allows long-term effective control of a parasitic plant.

The pigment, which is not particularly limited, is preferably exemplified by Red No. 202, an iron oxide, and a titanium oxide.

The parasitic plant control agent of the present embodiment can also contain (i) a repellent for preventing an animal (e.g., a bird) from taking (accidentally swallowing) a control agent or (ii) another ingredient.

The repellent is not particularly limited. Preferable examples of the repellent include: an odorous compound (e.g., naphthalene), caster oil, pine resin, polybutane, diphenylamine pentachlorophenol, quinone, a zinc oxide, an aromatic solvent, N-(trichloromethylthio)-4-cyclohexene-1, 2-carboxyimide, anthraquinone, copper oxalate, terpene, paradichlorobenzene, arylisothiocyanate, amyl acetate, anethole, citrus oil, a cresol, herb oil (e.g., geranium oil or lavender oil), menthol, methyl salicylate, nicotine, pentane thiol, a pyridine, tributyltin chloride, thiram, ziram, a carbamate insecticide (e.g., methiocarb), guazatine, a chlorinated cyclodiene insecticide (e.g., endrin), and an organophosphorous insecticide (e.g., fenthion). The another ingredient, which is not particularly limited, is preferably exemplified by 3-chloro-4-toluidine hydrochloride, strychnine-20, and 25-diazacholesterol hydrochloride (code name: SC-12937).

### [2. Parasitic Plant Control Method]

A parasitic plant control method of the present embodiment includes the step of inhibiting gentianose metabolism in a parasitic plant.

A specific arrangement of the step of inhibiting gentianose metabolism is not particularly limited, provided that the step allows inhibition of the metabolism. For example, the step can be implemented by applying, to a parasitic plant, a parasitic plant control agent of the present invention mentioned above. Note that, since the parasitic plant control agent of the present invention has already been explained, a specific explanation thereof is omitted below.

For example, it is only necessary that a gentianose metabolism inhibitor be applied to the parasitic plant in the step. The gentianose metabolism inhibitor, which is not particularly limited, is preferably exemplified by a low molecular weight compound and a nucleic acid (e.g., DNA or RNA). Note that the nucleic acid may be a vector which contains a desired nucleic acid (e.g., a nucleic acid fragment for RNAi or a nucleic acid fragment which codes for an enzyme for synthesizing a gentianose metabolism inhibitor). The arrangement allows the gentianose metabolism inhibitor to easily enter the parasitic plant to be spread, so that gentianose metabolism can be inhibited effectively.

The gentianose metabolism inhibitor is more specifically exemplified by a β-glucosidase activity inhibitor. Many enzymes involved in gentianose metabolism have been identified, and are exemplified by invertase and β-glucosidase (see (a) of Fig. 1, for example). In this case, from the viewpoint of low toxicity to a host plant, it is preferable that β-glucosidase activity be inhibited in the step of inhibiting gentianose metabolism.

In a case where β-glucosidase activity is inhibited in the step of inhibiting gentianose metabolism, it is preferable that the β-glucosidase activity inhibitor be applied to the parasitic plant. The β-glucosidase activity inhibitor is not particularly limited. Preferable examples of the preferable β-glucosidase activity inhibitor include: nojirimycin, cyclophellitol, neuromycin, 1-azafagomine, (3S,4S,5R)-3,4-dihidroxy-5-hydroxymethylpiperidine, D-mannono-δ-lactam, 2,4-dinitrophenyl-2-deoxy-2-fluoro-β-D-glucopyranoside, 2,4-dinitrophenyl-β-D-glucopyranoside, o-(difluoromethyl)aryl-β-D-glucoside, p-(difluoromethyl)aryl-β-D-glucoside, salicortin, cyclo-(D-proline-L-valine), and 1¹,4-anhydro-D-arabidohydrazide. From the viewpoint of economy and an effect of controlling a parasitic plant, nojirimycin is the most preferable of these compounds.

In a case where the gentianose metabolism inhibitor (e.g., the β-glucosidase activity inhibitor) is used in the step, a concentration at which the gentianose metabolism inhibitor is applied to the parasitic plant is not particularly limited. The concentration is preferably not less than 1 µM, more preferably not less than 10 µM, and most preferably not less than 25 µM. A concentration of not less than 1 µM allows a reduction in germination rate for the parasitic plant to approximately 20%, a concentration of not less than 10 µM allows a reduction in germination rate for the parasitic plant to approximately 10%, and a concentration of not less than 25 µM allows a reduction in germination rate for the parasitic plant to approximately 0%. Note that in this case, it is preferable that the gentianose metabolism inhibitor which is dissolved in an aqueous solution be applied to the parasitic plant.

It is preferable that in the step, gentianose metabolism be inhibited before the parasitic plant germinates. A parasitic plant has a complicated life cycle including a germination process, a parasitic process, a proliferation process, and the like. According to a parasitic plant control method of the present invention, a parasitic plant can be controlled by inhibiting especially the germination process of the complicated life cycle of the parasitic plant. Namely, according to the parasitic plant control method of the present invention, a parasitic plant is controlled by inhibiting germination of the parasitic plant. Therefore, the arrangement allows more effective control of a parasitic plant.

Further, in a case where the gentianose metabolism inhibitor is used in the step of inhibiting gentianose metabolism, it is preferable that a germination inducer for inducing germination of a parasitic plant be also applied to the parasitic plant at the same time as or before application of the gentianose metabolism inhibitor to the parasitic plant. According to the parasitic plant control method of the present embodiment, a parasitic plant is controlled by inhibiting a germination process in the parasitic plant. In other words, the parasitic plant control method of the present embodiment exerts its effect on a parasitic plant which is in the germination process and has not germinated. Therefore, according to the arrangement, it is possible to artificially initiate a germination process in a parasitic plant. This allows more effective control of a parasitic plant.

The germination inducer is not particularly limited. Preferable examples of the germination inducer include: GR24 (a kind of synthetic strigolactone), strigol, sorgolactone, alectrol, orobanchol, dihydrosorgoleone, jasmonic acid, cotylenins, fusicoccins, DMBQ (2,6-dimethoxy-p-benzoquinine), garba-GR24 (a kind of synthetic strigolactone), GR7 (a kind of synthetic strigolactone), and nijmegen-1 (as for specific structures of these compounds, see Non Patent Literature 1, for example).

A parasitic plant to be controlled by the parasitic plant control method of the present embodiment is not particularly limited. Any parasitic plant can be controlled by the parasitic plant control method. It is preferable that the parasitic plant to be controlled by the parasitic plant control method belong to an Orobanche species or a Striga species. The Orobanche plant, which is not particularly limited, is preferably exemplified by Orobanche minor. The Striga plant, which is not particularly limited, is preferably exemplified by Striga gesnerioides. The parasitic plant control method of the present embodiment exerts an excellent control effect particularly on the parasitic plant to be controlled. Further, the parasitic plant control method of the present embodiment can inhibit germination of a parasitic plant selectively without inhibiting germination of a non-parasitic plant typified by, for example, Trifolium pratense and Arabidopsis thaliana.

It is not particularly limited how the gentianose metabolism inhibitor is applied to the parasitic plant in the parasitic plant control method of the present embodiment. The gentianose metabolism inhibitor can be applied to the parasitic plant as in the case of a conventional pesticide. For example, it is only necessary to apply a granular, powdery, or aqueous gentianose metabolism inhibitor to a parasitic plant, a host plant, or soil. More specifically, it is only necessary to apply the gentianose metabolism inhibitor by use of a manual applicator, an electric applicator, a knapsack power applicator, a traveling power applicator, a tractor mounted applicator, an aerial applicator such as a manned or unmanned helicopter, or the like.

As described earlier, to what the gentianose metabolism inhibitor is to be applied is not particularly limited. It is only necessary that the gentianose metabolism inhibitor be finally absorbed into a seed of a parasitic plant. For example, the gentianose metabolism inhibitor can be applied directly to a parasitic plant or a host plant. Alternatively, the gentianose metabolism inhibitor can also be applied to soil. Application of the gentianose metabolism inhibitor to soil allows more effective control of a parasitic plant.

### Examples

### [1. Metabolomic Analysis of Seed Germination Process in Orobanche minor]

### <Induction of Germination of Orobanche minor>

Surfaces of seeds of Orobanche minor were sterilized by use of an aqueous solution containing 1% SDS and 5% sodium hypochlorite. Thereafter, the seeds were washed five times by use of sterile distilled water. Subsequently, the seeds were subjected to suction filtration and then naturally dried.

Two-layered GF/A glass filter paper was spread on a laboratory dish, and 50 mg to 100 mg of the seeds were sown on the two-layered GF/A glass filter paper.

1.5 mL of sterile water was placed in the laboratory dish, and conditioning was carried out in a dark place at 23°C for seven days. The two-layered GF/A glass filter paper was taken out of the laboratory dish on the eighth day after the beginning of conditioning and then dehydrated by use of a paper towel.

The two-layered GF/A glass filter paper was placed on new GF/A glass filter paper. Then, a germination stimulant GR24 (0.1 mg/L) was applied to the seeds of Orobanche minor, so as to induce its germination.

Note that the seeds were sampled zero day, one day, three days, six days, eight days after the beginning of conditioning and six hours, one day, two days, three days, four days, six days, and nine days after GR24 application, so as to carry out a metabolomic analysis of each of the seeds. Note that a GC/TOF-MS analysis was used for the metabolomic analysis. The following description specifically discusses how the GC/TOF-MS analysis was carried out.

### <Extraction of Metabolite, Derivatization, and GC/TOF-MS Analysis>

Each of the sampled seeds was frozen by liquid nitrogen and then crushed by use of an MM301 Mixer Mill (at 20 Hz, for 2 minutes).

1 mL of an extractant (methanol : water : chloroform = 2.5 : 1 : 1) was added to the crushed seeds. Concurrently with the extractant, 60 µL of a ribitol solution (0.2 mg/mL) was added to the crushed seeds as an internal standard substance.

The resulting solution was centrifuged at 16, 000 × g for three minutes. Then, 800 µL of a hydrophilic layer was moved to a new microtube.

400 µL of Milli Q water was added to the hydrophilic layer, so as to further carry out centrifugation under the same conditions. Thereafter, 600 µL of the hydrophilic layer was moved to a new microtube and then freeze-dried.

A methoxyamine hydrochloride pyridine solution (20 mg/mL, 100 µL) was added to the dried product, so as to be subjected to a reaction at 30°C for 90 minutes. Thereafter, 50 µL of N-methyl-N-(trimethylsilyl)trifluoroacetamide was further added to the dried product, so as to be subjected to a reaction at 37°C for 30 minutes. This derivatized various substances contained in the dried product. Then, 1 µL of the solution having been subjected to the derivatization was subjected to the GC/TOF-MS analysis.

An arrangement of a GC/TOF-MS analyzer and analysis conditions are described below.
- Autosampler: Agilent7638
- GC: Agilent6890N
- Capillary: 30 m x 0.25 mm i.d.
- Fused silica capillary: 0.25 µm CP-SIL8CB low bleed coat (Variance)
- MS: PegasusuIII (LECO)
- Split ratio: 1 : 20
- Injector temperature: 230°C
- Helium gas flow rate: 1 mL/min
- Column Temperature Program: A column temperature was maintained at 80°C for two minutes and then increased to 325°C at a temperature rising speed of 15°C/min. Thereafter, the column temperature was maintained at 325°C for nine minutes.
- MS introduction section temperature: 250°C
- Ion source temperature: 200°C
- Ionization voltage: 70 eV
- Scan speed: 20 scan/sec
- Mass range: 50 - 600 m/z

A chromatogram obtained by the GC/TOF-MS analysis was converted to a netCDF format by use of ChromaTOF Ver 2.32. Note that retention time was corrected by LineUP v2.0 (Informetrix). A PCA analysis was carried out by use of Pirouette v3.11 (Informetrix). Note that a further specific experimental protocol was in conformity with an experimental protocol attached to a GC/TOF-MS analyzer or the like.

Fig. 2 shows a result of a metabolomic analysis of a seed germination process in Orobanche minor.

No noticeable metabolic changes were observed before GR24 application (Controls), six hours after GR24 application (GR24 6hr), and one day after GR24 application (GR24 Day1) (see Fig. 2).

In contrast, noticeable metabolic changes were observed three days after GR24 application (GR24 Day3), six days after GR24 application (GR24 Day6), and nine days after GR24 application (GR24 Day9). Note that the result has revealed that the noticeable metabolic changes occurred approximately three days after GR24 application.

Fig. 3 shows a loading plot of Factor 1 in the PCA analysis.

Fig. 3 has revealed that noticeable metabolic changes occurred in malic acid, a monosaccharide, trehalose, sucrose, and gentianose by causing GR24 application to induce germination.

Data obtained by the GC/TOF-MS analysis was further specifically analyzed, so as to observe the details of how the metabolic changes occurred in gentianose, fructose, sucrose, and glucose in the experiment. Each of Figs. 4 through 7 shows a result of this observation. Note that fructose and glucose are metabolic products produced on a metabolic pathway of gentianose (see (a) of Fig. 1).

D0, D1, D3, and D6 in each of Figs. 4 through 7 indicate zero day, one day, three days, and six days, respectively after the beginning of conditioning. D8.5 indicates six hours after GR24 application. D9 through D12 indicate one day, two days, three days, and four days, respectively after GR24 application.

Fig. 4 has revealed that gentianose decreased as the germination process progressed. Figs. 5 and Fig. 7 have revealed that fructose and glucose, which are metabolic products of gentianose, increased in accordance with the decrease in gentianose.

In contrast, Fig. 6 has revealed that in the germination process, less metabolic change occurred in sucrose, which is not involved in gentianose metabolism, than in gentianose.

### [2. Effect of Inhibiting Germination of Parasitic Plant by Inhibiting Gentianose Metabolism]

It is known that an enzyme such as β-glucosidase is involved in gentianose metabolism (see (a) of Fig. 1). In view of this, it was examined whether or not a parasitic plant could germinate in a case where activity of the enzyme was inhibited. The following description specifically discusses how the examination was carried out.

Surfaces of seeds of Orobanche minor and Striga gesnerioides were sterilized by use of an aqueous solution containing 1% SDS and 5% sodium hypochlorite. Thereafter, the seeds were washed five times by use of sterile distilled water. Subsequently, the seeds were subjected to suction filtration and then naturally dried.

GF/A glass filter paper of Φ 47 mm was spread on a laboratory dish, a GF/D glass disk of 1 cm was placed on the GF/A glass filter paper, and approximately 50 grains of the seeds were sown on the GF/D glass disk.

1.5 mL of sterile water was placed in the laboratory dish, and conditioning was carried out in a dark place at 23°C for seven days. The GF/D glass disk was taken out of the laboratory dish on the eighth day after the beginning of conditioning and then placed on new GF/A glass filter paper.

1.5 mL of a germination stimulant GR24 (0.1 mg/L) was applied to the seeds of Orobanche minor, so as to induce its germination. A root extract of cowpea (CP) was applied to the seeds of Striga gesnerioides, so as to induce its germination. Note that concurrently with GR24 or the root extract of cowpea, nojirimycin, deoxynojirimycin, or deoxygalactonojirimycin was applied to the seeds. Note that nojirimycin is a typical β-glucosidase activity inhibitor, deoxynojirimycin is a typical α-glucosidase activity inhibitor, and deoxygalactonojirimycin is a typical galactosidase activity inhibitor.

Whether or not germination occurred was observed by microscopic observation four days after application of GR24 or the root extract of cowpea (CP) and the like to the seeds.

Fig. 8 shows a germination rate for Orobanche minor in the presence of various enzyme inhibitors. Fig. 10 shows a germination rate for Striga gesnerioides in the presence of nojirimycin.

Fig. 8 has revealed that nojirimycin inhibited germination of Orobanche minor. More specifically, it has been revealed that nojirimycin allowed a reduction in germination rate to approximately 20% at a concentration of 1 µM, to approximately 10% at a concentration of 10 µM, and to approximately 0% at a concentration of not less than 25 µM. In contrast, it has been revealed that deoxynojirimycin and deoxygalactonojirimycin had no influence on germination of Orobanche minor.

Fig. 10 has revealed that nojirimycin inhibited germination of Striga gesnerioides. More specifically, assume that a germination rate was 100% in a case where no nojirimycin was applied to the seeds. Respective germination rates obtained when 1 µM, 10 µM, 50 µM, 100 µM, and 1 mM of nojirimycin were applied to the seeds were approximately 24.3%, 7.5%, 6.2%, 0%, and 0%.

### [Recovery of Germination Inhibition Effect by Addition of Glucose]

It was examined whether or not germination inhibition due to nojirimycin which is a β-glucosidase inhibitor was recovered by glucose which is a metabolic product of β-glucosidase. The following description specifically discusses how the examination was carried out.

Surfaces of seeds of Orobanche minor were sterilized by use of an aqueous solution containing 1% SDS and 5% sodium hypochlorite. Thereafter, the seeds were washed five times by use of sterile distilled water. Subsequently, the seeds were subjected to suction filtration and then naturally dried.

GF/A glass filter paper of Φ 47 mm was spread on a laboratory dish, a GF/D glass disk of 1 cm was placed on the GF/A glass filter paper, and approximately 50 grains of the seeds were sown on the GF/D glass disk.

1.5 mL of sterile water was placed in the laboratory dish, and conditioning was carried out in a dark place at 23°C for seven days. The GF/D glass disk was taken out of the laboratory dish on the eighth day after the beginning of conditioning and then placed on new GF/A glass filter paper.

1.5 mL of a germination stimulant GR24 (0.1 mg/L) was applied to the seeds, so as to induce its germination. Note that concurrently with GR24, nojirimycin or a mixture of nojirimycin and glucose (glucose concentration: 10 mM) was added to the seeds.

Whether or not germination occurred was observed by microscopic observation four days after application of GR24 and the like to the seeds.

Fig. 9 shows a germination recovery effect of glucose versus a germination inhibition effect of nojirimycin.

Fig. 9 has revealed that germination inhibition caused by nojirimycin was recovered by glucose.

### [4. Selective Inhibition of Germination of Parasitic Plant by Inhibition of Gentianose Metabolism]

It was examined whether or not germination inhibition caused by inhibition of gentianose metabolism was a selective phenomenon with respect to a parasitic plant. Note that nojirimycin was used as a typical gentianose metabolism inhibitor. Note also that Orobanche minor and Striga gesnerioides were used as typical parasitic plants and Trifolium pratense and Arabidopsis thaliana were used as typical non-parasitic plants. The following description specifically discusses how the examination was carried out.

Surfaces of seeds of Orobanche minor, Striga gesnerioides, Arabidopsis thaliana, and Trifolium pratense were sterilized by use of an aqueous solution containing 1% SDS and 5% sodium hypochlorite. Thereafter, the seeds were washed five times by use of sterile distilled water. Subsequently, the seeds were subjected to suction filtration and then naturally dried.

GF/A glass filter paper of Φ 47 mm was spread on a laboratory dish, a GF/D glass disk of 1 cm was placed on the GF/A glass filter paper, and approximately 50 grains of the seeds were sown on the GF/D glass disk.

1.5 mL of sterile water was placed in the laboratory dish, and conditioning was carried out in a dark place at 23°C for seven days. The GF/D glass disk was taken out of the laboratory dish on the eighth day after the beginning of conditioning and then placed on new GF/A glass filter paper.

1.5 mL of a germination stimulant GR24 (0.1 mg/L) was applied to the seeds of Orobanche minor, so as to induce its germination. A root extract of cowpea (CP) was applied to the seeds of Striga gesnerioides, so as to induce its germination. Note that concurrently with GR24 or the root extract of cowpea (CP), nojirimycin was applied to the seeds. Note also that nojirimycin is a typical β-glucosidase activity inhibitor of.

Only nojirimycin but no special germination inducer was applied to the seeds of Arabidopsis thaliana and the seeds of Trifolium pratense, so as to induce their germination.

Whether or not germination occurred was observed by microscopic observation four days after application of GR24 or the root extract of cowpea (CP) to the seeds. In contrast, whether or not germination occurred in Arabidopsis thaliana and Trifolium pratense was observed by microscopic observation four days after application of nojirimycin.

Fig. 13 shows germination rates for respective plants in the presence of nojirimycin which typifies a gentianose metabolism inhibitor.

Fig. 13 has revealed that nojirimycin effectively inhibited germination of Orobanche minor and Striga gesnerioides which typify parasitic plants. Note that this result is similar to those described with reference to Figs. 8 and 10. In contrast, Fig. 13 has also revealed that nojirimycin did not inhibit germination of Trifolium pratense and Arabidopsis thaliana which typify non-parasitic plants.

The above description shows that a geniatnose metabolism inhibitor allows selective inhibition of germination of a parasitic plant. More specifically, the above description shows that a geniatnose metabolism inhibitor allows selective inhibition of germination of a parasitic plant without inhibiting germination of a useful non-parasitic plant such as agricultural crops.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

According to the present invention, it is possible to effectively control a parasitic plant which is parasitic on crops. Therefore, the present invention is extensively usable in an agricultural field as a herbicide or a pesticide.

## Claims

1. A parasitic plant control agent comprising a gentianose metabolism inhibitor.

2. The parasitic plant control agent as set forth in claim 1, wherein the gentianose metabolism inhibitor is a β-glucosidase activity inhibitor.

3. The parasitic plant control agent as set forth in claim 2, wherein the β-glucosidase activity inhibitor is nojirimycin, cyclophellitol, neuromycin, 1-azafagomine, (3S,4S,5R)-3,4-dihidroxy-5-hydroxymethylpiperidine, D-mannono-δ-lactam, 2,4-dinitrophenyl-2-deoxy-2-fluoro-β-D-glucopyranoside, 2,4-dinitrophenyl-β-D-glucopyranoside, o-(difluoromethyl)aryl-β-D-glucoside, p-(difluoromethyl)aryl-β-D-glucoside, salicortin, cyclo-(D-proline-L-valine), or 1¹,4-anhydro-D-arabidohydrazide.

4. The parasitic plant control agent as set forth in any one of claims 1 through 3, wherein a parasitic plant to be controlled belongs to an Orobanche species or a Striga species.

5. A parasitic plant control method comprising the step of inhibiting gentianose metabolism in a parasitic plant.

6. The parasitic plant control method as set forth in claim 5, wherein β-glucosidase activity is inhibited in the step.

7. The parasitic plant control method as set forth in claim 6, wherein nojirimycin, cyclophellitol, neuromycin, 1-azafagomine, (3S,4S,5R)-3,4-dihidroxy-5-hydroxymethylpiperidine, D-mannono-δ-lactam, 2,4-dinitrophenyl-2-deoxy-2-fluoro-β-D-glucopyranoside, 2,4-dinitrophenyl-β-D-glucopyranoside, o-(difluoromethyl)aryl-β-D-glucoside, p-(difluoromethyl)aryl-β-D-glucoside, salicortin, cyclo-(D-proline-L-valine), or 1¹,4-anhydro-D-arabidohydrazide is applied to the parasitic plant as a β-glucosidase activity inhibitor in the step.

8. The parasitic plant control method as set forth in claim 7, wherein the β-glucosidase activity inhibitor is applied to the parasitic plant at a concentration of not less than 1 µM.

9. The parasitic plant control method as set forth in any one of claims 5 through 8, wherein the gentianose metabolism is inhibited before the parasitic plant germinates.

10. The parasitic plant control method as set forth in any one of claims 5 through 9, wherein the parasitic plant belongs to an Orobanche species or a Striga species.
